# EUROPEAN PATENT SPECIFICATION

(11) **EP 3 855 990 B1**
(45) Date of publication and mention of the grant of the patent: **23.03.2022**
(21) Application number: 20731086.3
(22) Date of filing: 10.06.2020
(51) Int. Cl.: A47J 36/24, A47J 36/32

(54) **HEATING DEVICE**
HEIZVORRICHTUNG
DISPOSITIF DE CHAUFFAGE

(30) Priority: 19.06.2019 EP 19181146; 13.11.2019 EP 19208802
(43) Date of publication of application: 04.08.2021
(73) Proprietor: Koninklijke Philips N.V., 5656 AG Eindhoven (NL)
(72) Inventor: LUI, Kwan, Fai, 5656 AE Eindhoven (NL)
(74) Representative: Philips Intellectual Property & Standards
(86) International application number: PCT/EP2020/066001
(87) International publication number: WO 2020/254156

(56) References cited:
- US-A1- 2004 140 304
- US-A1- 2017 086 620

## Description

### FIELD OF THE INVENTION

The disclosure relates to a heating device for heating a foodstuff in a container and to a method for heating a foodstuff in a container using the device. The device and method are particularly suitable for warming milk in a baby bottle.

### BACKGROUND OF THE INVENTION

Heating foodstuffs offers many beneficial effects, from making frozen products readily consumable to increasing a consumer's enjoyment of the foodstuff. However, the heating effects of many heating devices can be uneven, which is not desirable as it can lead to inconsistency in the temperature of the foodstuff (e.g. localised "hot spots" and "cold spots" in the foodstuff). Furthermore, areas of high localised heat can cause damage to the nutrients contained within the foodstuff.

These considerations are particularly relevant for formula milk that is fed to babies from containers such as bottles. Typically formula milk is heated to a temperature close to the normal temperature of a human body (e.g. 37 degrees centigrade) before being fed to a baby. Heating the formula milk in this way can make it more palatable for the baby than cold formula milk, since milk heated in this way may be closer in temperature to breast milk.

An electrical bottle warmer may be used to heat formula milk in a container such as a bottle. A conventional electrical bottle warmer heats baby milk in a hot water bath. The device typically includes a heating element and a thermostatic temperature control device for heating water in the water bath. Heat is transferred from the heated water in the water bath to the bottle (or other container) containing the milk, thereby heating the milk in the bottle. This approach can result in the baby milk overheating if the bottle is left in the water bath for too long, which can cause damage to nutrients contained within the milk and can also give rise to a risk of injuring the baby if the overheated milk is given to the baby immediately, or else to delay in feeding the baby while the overheated milk cools to a suitable temperature.

One way to avoid the milk overheating is for a user to check the milk temperature frequently when they are warming the baby milk using the electrical bottle warmer. Once the milk reaches a desired temperature the user should remove the milk bottle from the bottle warmer. As some conventional electrical bottle warmers heat the water continuously, if the user leaves the milk bottle in such a warmer, the milk will be overheated. In an attempt to mitigate against this issue, a user might use a low temperature setting of the bottle warmer for milk warming. Although the risk of the milk being overheated is reduced at lower warming temperatures, it takes a longer time for the milk to reach the desired temperature.

A document disclosing the features of the preamble of claim 1 may be found in US 2017086620 A1, which relates to a heating device for heating food in a container, in particular milk in a bottle.

### SUMMARY OF THE INVENTION

As noted above, a limitation with existing heating devices for heating foodstuffs such as milk is that in order to avoid accidentally overheating the foodstuff being heated a user must periodically check the temperature of the foodstuff while it is being heated by the heating device. To reduce the risk of accidental overheating, the user may choose to use a low temperature setting of the heating device, which increases the time taken for the foodstuff to reach a desired temperature. It would therefore be valuable to have an improvement aimed at addressing these limitations.

Therefore, according to a first aspect, there is provided a heating device. The heating device comprises a chamber configured to contain a fluid and to receive the container. The heating device further comprises a heating unit for heating the fluid. The heating device further comprises a temperature sensing unit and a controller configured to control the heating unit. The temperature sensing unit is configured to sense a temperature of the fluid. The controller is configured to monitor the temperature of the fluid to determine a first measured temperature pattern for the fluid over a first predetermined period of time. The controller is configured to determine a first heating profile and control the heating unit so as to heat the fluid according to the first heating profile if the first measured temperature pattern corresponds to a first predetermined temperature pattern.

In some embodiments, the first predetermined temperature pattern is indicative of a decreasing temperature trend of the fluid.

In some embodiments, the controller is further configured to monitor the temperature of the fluid over a second predetermined period of time to determine a second measured temperature pattern for the fluid over the second predetermined period of time and, if the second measured temperature pattern corresponds to a second predetermined temperature pattern, to control the heating unit so as to continue to heat the fluid according to the first heating profile.

In some embodiments, the controller is further configured to monitor the temperature of the fluid over a second predetermined period of time to determine a second measured temperature pattern for the fluid over the second predetermined period of time and, if the second measured temperature pattern does not correspond to a second predetermined temperature pattern, to determine a second heating profile and control the heating unit so as to heat the fluid according to the second heating profile.

In some embodiments, the controller is further configured to control the heating unit to heat the fluid for a second predetermined period of time and to monitor the temperature of the fluid to determine a second measured temperature pattern for the fluid over the second predetermined period of time if the first measured temperature pattern does not correspond to the first predetermined temperature pattern.

In some embodiments, the controller is further configured to control the heating unit so as to heat the fluid according to the first heating profile if the second measured temperature pattern corresponds to a second predetermined temperature pattern.

In some embodiments the controller is further configured to determine a third heating profile and to control the heating unit so as to heat the fluid according to the third heating profile if the first measured temperature pattern does not correspond to the first predetermined temperature pattern and the second measured temperature pattern does not correspond to the second predetermined temperature pattern.

In some embodiments the controller is configured to provide a signal following completing heating of the fluid according to the first, second or third heating profile.

According to a second aspect, there is provided a method for heating a foodstuff in a container. The method comprises measuring a temperature of fluid in a chamber of the heating device in which the container is received. The method further comprises monitoring the measured temperature of the fluid to determine a first measured temperature pattern for the fluid over a first predetermined period of time. The method further comprises determining a first heating profile and controlling the heating unit so as to heat the fluid according to the first heating profile, if the first measured temperature pattern corresponds to a first predetermined temperature pattern.

In some embodiments, the first predetermined temperature pattern is indicative of a decreasing temperature trend of the fluid.

In some embodiments, the method further comprises monitoring the temperature of the fluid over a second predetermined time period to determine a second measured temperature pattern for the fluid over the second predetermined period of time and, if the second measured temperature pattern corresponds to a second predetermined temperature pattern, controlling the heating unit so as to continue to heat the fluid according to the first heating profile.

In some embodiments, the method further comprises monitoring the temperature of the fluid over a second predetermined time period to determine a second measured temperature pattern for the fluid over the second predetermined period of time and, if the second measured temperature pattern does not correspond to a second predetermined temperature pattern, determining a second heating profile and controlling the heating unit so as to heat the fluid according to the second heating profile.

In some embodiments, the method further comprises controlling the heating unit to heat the fluid for a second predetermined period of time and monitoring the temperature of the fluid to determine a second measured temperature pattern for the fluid over the second predetermined period of time if the first measured temperature pattern does not correspond to the first predetermined temperature pattern.

In some embodiments, the method further comprises controlling the heating unit so as to heat the fluid according to the first heating profile if the second measured temperature pattern corresponds to a second predetermined temperature pattern.

In some embodiments, the method further comprises determining a third heating profile and controlling the heating unit so as to heat the fluid according to the third heating profile if the first measured temperature pattern does not correspond to the first predetermined temperature pattern and the second measured temperature pattern does not correspond to the second predetermined temperature pattern.

In some embodiments, the method further comprises providing a signal following completing heating of the fluid according to the first, second or third heating profile.

According to a third aspect, there is provided a computer program product comprising a computer readable medium. The computer readable medium has a computer readable code embodied therein. The computer readable code is configured such that, on execution by a suitable computer or processor, the computer or processor is caused to operate the device according to the method described earlier.

According to the aspects and embodiments described above, the limitations of existing techniques are addressed. In particular, it has been appreciated that conventional heating devices and methods for heating a foodstuff such as baby milk can lead to overheating of the foodstuff and to uneven heating of the foodstuff. Thus, according to the above-described aspects and embodiments, these limitations are addressed by monitoring the temperature of the fluid in the heating device to determine if a first measured temperature pattern for the fluid over a first period of time corresponds to a first predetermined temperature pattern. In this way the controller is able to determine if the temperature pattern of the fluid matches a temperature pattern that would be expected when a container containing a foodstuff at a particular initial temperature or within a particular initial temperature range (e.g. a foodstuff such as milk that has been taken out of a refrigerator) is received in the chamber of the heating device. If so, the controller determines a first heating profile that is appropriate to the particular initial temperature or initial temperature range of the foodstuff and controls the heating unit so as to heat the fluid according to the first heating profile. In this way the risk of overheating the foodstuff and of uneven heating of the foodstuff can be reduced. There is thus provided an improved device and method for heating a foodstuff.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 shows a schematic cross-sectional representation of a heating device;
Fig. 2 shows a method of operating a heating device; and
Figs. 3-6 are graphs illustrating the operation of the heating device.

### DETAILED DESCRIPTION OF EMBODIMENTS

As noted above, there is provided herein an improved heating device and method for heating a foodstuff in a container. In more detail, there is provided a heating device which at least partially overcomes the limitations associated with existing heating devices.

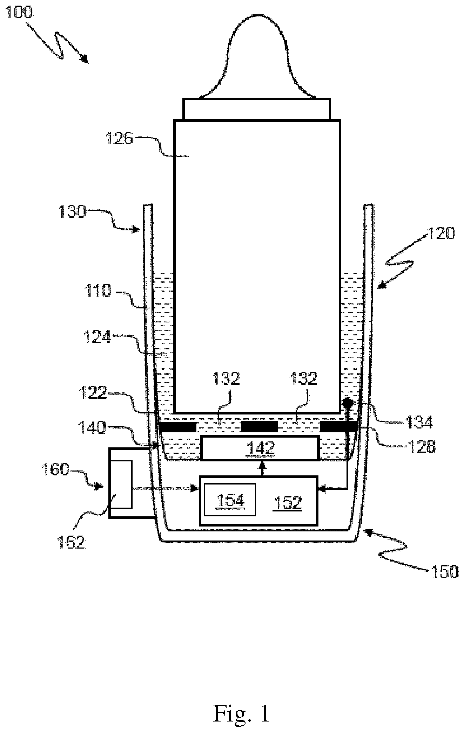

Referring first to Figure 1, a heating device according to an embodiment is shown generally at 100. The heating device 100 includes a housing 110 having a main body 120 and a base 150.

The main body 120 defines a chamber 122 that is configured to contain water or another liquid or fluid 124 and to receive a container 126 such as a bottle containing a foodstuff such as milk to be heated. The main body 120 includes a divider 128 that divides the main body 120 into an upper portion 130 and a lower portion 140.

A heating unit 142, which may comprise, for example, an electrical heating element, is provided in the lower portion 140 of the chamber 122, below the divider 128. The divider 128 is configured and positioned in the chamber 122 so as to prevent the container 126 from coming into contact with the heating unit 142, but includes a plurality of holes or apertures 132 which permit fluid 124 to come into contact with the heating unit 142, thereby allowing the fluid 124 to be heated by the heating unit 142.

A temperature sensing unit 134, which may comprise, for example, a negative temperature coefficient (NTC) thermistor, is provided in the chamber 122, for sensing a temperature of the fluid 124 in the chamber 122. In the illustrated example the temperature sensing unit 134 is shown extending through the divider 128 into the chamber 122, but it will be appreciated by those skilled in the art that the temperature sensing unit 134 could be positioned in any convenient location within the chamber 122 that permits the temperature sensing unit 134 to sense the temperature of the fluid 124 in the chamber 122. The temperature sensing unit 134 is operative to output an electrical signal (e.g. a voltage) having a magnitude that is dependent (at least in part) upon the temperature of the fluid 124 in the chamber 122.

The device 100 further comprises a controller 152, which in the illustrated example is provided in the base 150 of the housing 110 (but which could equally be provided in any convenient position or location within the housing 110). The controller 152 may comprise or be implemented as one or more processors. The controller 152 is electrically coupled to the heating unit 142 such that the controller 152 can control the operation of the heating unit 142. The controller 152 is also electrically coupled to the temperature sensing unit 134, such that the controller 152 is able to receive the electrical signal output by the temperature sensing unit 134. The controller 152 is also electrically coupled to a memory 154 via an appropriate interface or bus arrangement such that data can be transferred between the controller 152 and the memory 154. The memory 154 may store instructions for execution by the controller 152 (or by one or more processors of the controller) to cause the heating device 100 to operate in the manner described herein. The memory 154 may form part of the controller 152, as in the example shown in Figure 1, or may alternatively be external to the controller 152.

The heating device 100 further comprises a user interface portion 160. The user interface portion 160 includes one or more controls that allow a user of the heating device 100 to control the operation of the heating device 100. The controls may include, for example, one or more switches, buttons, rotary knobs, touch controls or the like. The user interface portion 160 also includes one or more output transducers 162, which may comprise one or more lamps, light emitting diodes, buzzers, vibration units, sounders, speakers or the like.

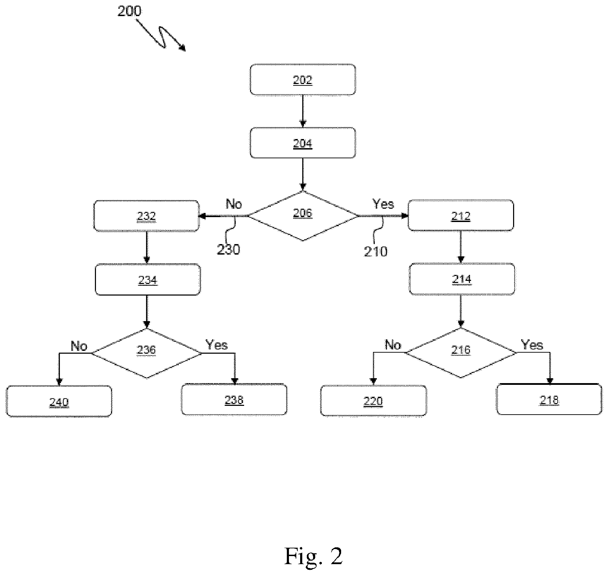

In use of the heating device 100, the chamber 122 is filled (or partially filled) with water or another suitable fluid 124 that can be heated safely. A container such as a bottle (e.g. bottle 126) containing a foodstuff such as milk to be heated is received in the fluid 124 within the chamber 122. The controller 152 is operative to control the heating unit 142 to cause the heating unit to heat the fluid 124 in accordance with a predefined heating profile in order to heat the foodstuff within the container 126 to a desired temperature, as will now be described with reference to Figure 2.

Figure 2 is a flow chart showing a method 200 of operation of the heating device 100 of Figure 1, performed by the controller 152. The method 200 starts at step 202, when a user of the device 100 initiates heating of the container 126 by actuating a control of the user interface portion 160.

The controller 152 monitors the temperature of the fluid 124 in the chamber 122 for a first predetermined period of time t1, which may be, for example, 30 seconds, to generate a set of fluid temperature data for the first predetermined period of time t1. The set of fluid temperature data for the first predetermined time period t1 is stored by the controller 152 in the memory 154. For example, the controller 152 may sample the electrical signal output by the temperature sensing device 134 at regular sampling intervals (e.g. every second, every 0.5 seconds, every 0.1 seconds or at any other suitable sampling frequency) over the first predetermined period of time t1 to generate the set of temperature data for the first predetermined period of time t1.

The controller 152 then evaluates the fluid temperature data for the first predetermined period of time t1 to determine whether a first measured fluid temperature pattern for the first predetermined period of time t1 corresponds to a first predefined fluid temperature pattern. The first predefined fluid temperature pattern may be stored in the memory 154 and may comprise, for example, a set of data points. The first predefined fluid temperature pattern may represent an expected fluid temperature pattern when a container containing a chilled foodstuff, e.g. a bottle of milk that has been taken from a refrigerator, is received in the chamber 122 of the device 100. For example, the first predefined fluid temperature pattern may be indicative of a decreasing temperature trend of the fluid 124.

In evaluating the fluid temperature data for the first predetermined period of time t1, the controller 152 may process the fluid temperature data, for example by filtering the data to remove noise, identifying peak values in the data and identifying a fluid temperature trend (increasing or decreasing) in the fluid temperature data for the first predetermined period of time t1.

The controller 152 may determine that the first measured fluid temperature data pattern corresponds to the first predefined fluid temperature pattern if, for example, a temperature trend of the fluid temperature data for the first predetermined period of time t1 is the same as or similar to (e.g. is within a predefined similarity threshold of) a temperature trend of the first predefined fluid temperature pattern, or if, for example, peak values identified in the fluid temperature data for the first predetermined period of time t1 correspond to (e.g. have the same or a similar magnitude as and/or appear at the same or similar times as) peak values identified in the first predefined fluid temperature pattern.

If the controller 152 determines, at step 206, that the first measured fluid temperature pattern for the first predetermined period of time t1 corresponds to the first predefined fluid temperature pattern (as indicated by "Yes" arrow 210 in Figure 2), the method moves to step 212, in which the controller 152 determines a first heating profile and controls the heating unit 142 in accordance with the first heating profile to heat the fluid 124, thereby heating the foodstuff in the container 126.

The first heating profile may be, for example, a heating profile designed to heat a chilled foodstuff (e.g. a bottle of milk that has been taken from a refrigerator). The first heating profile may comprise a first target temperature for the fluid 124 and/or a first heating duration for which the fluid 124 is to be heated by the heating unit 142, such that in controlling the heating unit 142 in accordance with the first heating profile the controller 152 switches the heating unit 142 on for the first heating duration or until the fluid 124 has reached the first target temperature. The controller 152 thus monitors the temperature of the fluid 124 during the first heating duration (e.g. by sampling the electrical signal output by the temperature sensor 134 in the manner described above) to identify when the fluid 124 has reached the first target temperature.

When the first heating profile has been partially completed, the method moves to step 214, in which the controller 152 monitors the temperature of the fluid 124 (e.g. by sampling the electrical signal output by the temperature sensor 134 in the manner described above) for a second predefined period of time t2, to generate a set of fluid temperature data for the second predefined period of time t2.

The controller 152 then evaluates the fluid temperature data for the second predetermined period of time t2 to determine whether a second measured fluid temperature pattern for the second predetermined period of time t2 corresponds to a second predefined fluid temperature pattern. In evaluating the fluid temperature data for the second predetermined period of time t2, the controller 152 may process the fluid temperature data, for example by filtering the data to remove noise, identifying peak values in the data and identifying a fluid temperature trend (increasing or decreasing) in the fluid temperature data for the second predetermined period of time t2.

The second predefined fluid temperature pattern may be stored in the memory 154 and may comprise, for example, a set of data points. The second predefined fluid temperature pattern may represent an expected fluid temperature pattern when a container containing a chilled foodstuff, e.g. a bottle of milk that has been taken from a refrigerator, received in the chamber 122 of the device 100, has been heated according to the first heating profile. For example, the second predefined fluid temperature pattern may be indicative of a temperature trend that shows a slower rate of temperature decrease of the fluid 124 than a decreasing temperature trend of the first predefined fluid temperature pattern, or may be indicative of an increasing temperature trend of the fluid 124.

The controller 152 may determine that the second measured fluid temperature data pattern corresponds to the second predefined fluid temperature pattern if, for example, a temperature trend of the fluid temperature data for the second predetermined period of time t2 is the same as or similar to (e.g. is within a predefined similarity threshold of) a temperature trend of the second predefined fluid temperature pattern, or if, for example, peak values identified in the second temperature data for the second predetermined period of time t2 correspond to (e.g. have the same or a similar magnitude as and/or appear at the same or similar times as) peak values identified in the second predefined fluid temperature pattern.

If the controller 152 determines, at step 216, that the second measured fluid temperature pattern for the second predetermined period of time t2 corresponds to the second predefined fluid temperature pattern, the method moves to step 218, in which the controller 152 continues to control the heating unit 142 in accordance with the first heating profile to heat the fluid 124, thereby continuing heating the foodstuff in the container 126.

Step 216 of the method thus acts as a confirmation step, to confirm whether the determination made at step 206 was correct, in the sense that if the second measured fluid temperature pattern for the second predetermined period of time t2 corresponds to the second predefined fluid temperature pattern, the temperature behaviour of the fluid 214 is as expected and so the decision to heat the fluid 124 in accordance with the first heating profile was correct.

If the controller 152 determines, at step 216, that the second measured fluid temperature pattern for the second predetermined period of time t2 does not correspond to the second predefined fluid temperature pattern, the method moves to step 220, in which the controller 152 determines a second heating profile and controls the heating unit 142 in accordance with the second heating profile to heat the fluid 124, thereby heating the foodstuff in the container 126.

The second heating profile may be, for example, a heating profile designed to heat a foodstuff (e.g. a bottle of milk) that is at room temperature. The second heating profile may comprise a second target temperature for the fluid 124, and/or a second heating duration for which the fluid 124 is to be heated by the heating unit 142, such that in controlling the heating unit 142 in accordance with the second heating profile the controller 152 switches the heating unit 142 on for the second heating duration or until the fluid 124 has reached the second target temperature. The controller 152 thus monitors the temperature of the fluid 124 during the second heating duration (e.g. by sampling the electrical signal output by the temperature sensor 134 in the manner described above) to identify when the fluid 124 has reached the second target temperature. The second target temperature may be lower than the first target temperature of the first heating profile. Additionally or alternatively, the second heating duration may be different from, e.g. shorter than, the first heating duration of the first heating profile.

Returning to step 206, if the controller 152 determines, at step 206, that the first measured fluid temperature pattern for the first predetermined period of time t1 does not correspond to the first predefined fluid temperature pattern (as indicated by "No" arrow 230 in Figure 2), the method moves to step 232, in which the controller 152 controls the heating unit 142 to heat the fluid 124 for the second predetermined time period t2.

At step 234 the controller 152 monitors the temperature of the fluid 124 (e.g. by sampling the electrical signal output by the temperature sensor 134 in the manner described above) for the second predefined period of time t2, to generate a set of fluid temperature data for the second predefined period of time t2.

The controller 152 then evaluates the fluid temperature data for the second predetermined period of time t2 to determine whether a second measured fluid temperature pattern for the second predetermined period of time t2 corresponds to the second predefined fluid temperature pattern. As discussed above, the second predefined fluid temperature pattern may be stored in the memory 154 and may comprise, for example, a set of data points. The second predefined fluid temperature pattern may represent an expected fluid temperature pattern when a container containing a chilled foodstuff, e.g. a bottle of milk that has been taken from a refrigerator, received in the chamber 122 of the device 100, has been heated according to the first heating profile. For example, the second predefined fluid temperature pattern may be indicative of a temperature trend that shows a slower rate of temperature decrease of the fluid 124 than a decreasing temperature trend of the first predefined fluid temperature pattern, or may be indicative of an increasing temperature trend of the fluid 124.

If the controller 152 determines, at step 236, that the second measured fluid temperature pattern for the second predetermined period of time t2 corresponds to the second predefined fluid temperature pattern, the method moves to step 238, in which the controller 152 controls the heating unit 142 in accordance with the first heating profile to heat the fluid 124, thereby heating the foodstuff in the container 126.

If the controller 152 determines, at step 236, that the second measured fluid temperature pattern for the second predetermined period of time t2 does not correspond to the second predefined fluid temperature pattern, the method moves to step 240, in which the controller 152 determines a third heating profile and controls the heating unit 142 in accordance with the third heating profile to heat the fluid 124, thereby heating the foodstuff in the container 126.

The third heating profile may be, for example, a heating profile designed to heat a foodstuff (e.g. a bottle of milk) for which the temperature cannot be determined. The third heating profile may comprise a third target temperature for the fluid 124 and/or a third heating duration for which the fluid 124 is to be heated by the heating unit 142, such that in controlling the heating unit 142 in accordance with the third heating profile the controller 152 switches the heating unit 142 on for the third heating duration or until the fluid 124 has reached the third target temperature. The controller 152 thus monitors the temperature of the fluid 124 during the third heating duration (e.g. by sampling the electrical signal output by the temperature sensor 134 in the manner described above) to identify when the fluid 124 has reached the third target temperature. The third target temperature may be lower than the second target temperature of the second heating profile. Additionally or alternatively, the third heating duration may be different from, e.g. shorter than, the second heating duration of the second heating profile.

As will be apparent from the above description, the heating profile used by the controller 152 to control the heating unit 142 to heat the fluid 142 in the chamber 122 is dependent upon the first and second measured fluid temperature patterns. These measured fluid temperature patterns depend upon an initial temperature of the foodstuff to be heated (i.e. a temperature of the foodstuff before any heating has been performed). By determining a heating profile to use according to the measured fluid temperature patterns as described above, overheating of the foodstuff can be avoided, since a target heating temperature and heating time for the fluid 124 that are appropriate to the initial temperature of the foodstuff can be used to heat the fluid 124, thereby heating the foodstuff within the container 126. In addition, determining a heating profile according to the measured fluid temperature patterns helps to reduce the risk of uneven heating of the foodstuff, since the target temperatures for the fluid 124 defined in each of the heating profiles can be selected so as to promote even heating of a foodstuff, taking into account the initial temperature of the foodstuff.

Further, the heating device 100 may be configured to provide one or more of an audible, visual or haptic alert on completion of heating the fluid 124 in accordance with one of the heating profiles, using one or more of the output transducers 162. Thus, the controller 152 may be operative, following completion of heating of the fluid 124 in accordance with one of the heating profiles (e.g. when the target temperature defined in the heating profile has been reached or/and when the heating duration defined in the heating profile has elapsed), to actuate one or more of the output transducers 162, so as to output the audible, visual or haptic alert. This further helps to avoid overheating, as the user can be prompted to remove the container 126 from the chamber 122 of the device 100 when the foodstuff has been heated to the desired temperature.

The heating device 100 may be configured to pre-heat the fluid to a control temperature prior to the beginning of the first predefined period of time t1. Thus the method 200 may include an optional step before step 204 in which the controller 152 controls the heating unit 142 to heat the fluid 124 in the chamber to the control temperature. Pre-heating the fluid 124 to the control temperature in this manner may facilitate the analysis by the controller 152 of the first measured fluid temperature pattern.

The heating device 100 may be configured to take into consideration a volume or quantify of the foodstuff to be heated. For example, the user interface portion 160 may include one or more controls that allow a user to specify the volume or quantity of the foodstuff to be heated, and the controller 152 may be configured to take into consideration the user-specified volume or quantity of the foodstuff when determining the first, second and third heating profiles. For example, the controller 152 may select a heating profile with parameters (e.g. target fluid heating temperature and/or heating time) that are appropriate to the user-specified volume or amount of the foodstuff, or may modify one or more parameters (e.g. the target fluid heating temperature and/or the heating time) defined by the first, second or third heating profile according to the user-specified volume or quantity of foodstuff. For example, if the user specifies a volume of 100ml of milk to be heated (using an appropriate control of the user interface portion), the controller may 152 select a predefined heating profile from the memory 154 defining a heating temperature of, e.g. 60°C and a heating time of, e.g. 1.5 minutes for use as the first heating profile, whereas if the user specifies a volume of 200ml of mile to be heated the controller may select a different predefined heating profile from the memory 154 defining a heating temperature of, e.g. 70°C and a heating time of, e.g. 1.5 minutes for use as the first heating profile. As will be appreciated, the memory 154 may store a plurality of different heating profiles, each defining parameters (e.g. the target fluid heating temperature and/or the heating time) that are appropriate to different volumes or quantities of foodstuff to be heated. The plurality of different heating profiles may be stored, for example, in a look-up table that is indexed by a foodstuff volume or quantity value.

Alternatively, the controller 152 may modify one or more parameters (e.g. the target fluid heating temperature and/or the heating time) defined in a predefined heating profile that is stored in the memory 154 according to the user-specified foodstuff volume or quantity. For example, a default first heating profile may define a target fluid heating temperature of, e.g., 60°C and a heating time of, e.g. 1.5 minutes for a 100ml volume of foodstuff to be heated. If the user specifies a volume of 200ml of foodstuff to be heated, the controller 152 may modify one or more of the parameters defined in the default heating profile accordingly, e.g. by changing the target fluid heating temperature to 70°C.

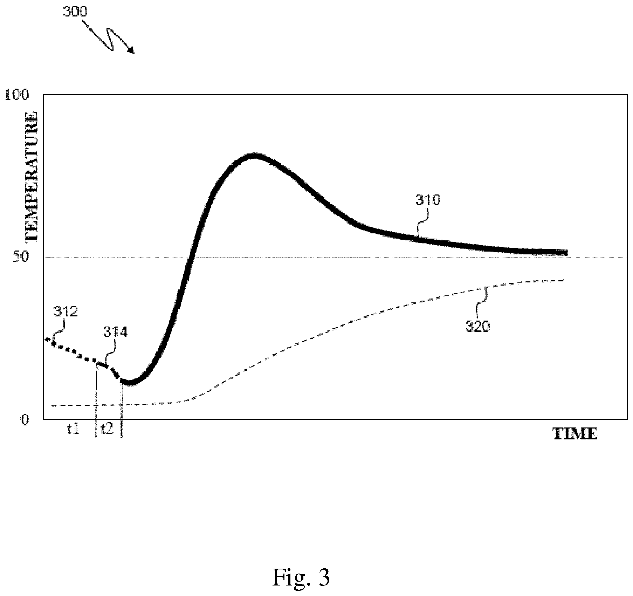

Figure 3 is a graph illustrating the operation of the heating device 100. The graph 300 of Figure 3 illustrates operation of the heating device according to steps 202, 204, 206, 210, 212, 214, 216 and 218 of the method 200 described above with reference to Figure 2.

The graph 300 of Figure 3 includes first and second curves 310 and 320. The first curve 310 shows the measured temperature of the water 124 (or other fluid) contained in the chamber 122 over a period of time. The second curve 320 shows the temperature of a foodstuff contained in the container 126 that is received in the chamber 122 over the same period of time.

As can be seen in Figure 3, in this example a first portion 312 of the first curve 310, which represents a measured temperature of the water 124 or other fluid over the first predetermined period of time t1, exhibits a first, decreasing, temperature trend. The controller 152 determines that this first temperature trend corresponds to the first predefined fluid temperature pattern. Thus, as described above, the controller 152 determines a first heating profile and controls the heating unit 142 to heat the water 124 or other fluid according to the first heating profile.

A second portion 314 of the first curve 310, which represents a measured temperature of the water 124 or other fluid over the second predetermined period of time t2 exhibits a second, decreasing, temperature trend. The controller 152 determines that this second temperature trend corresponds to the second predefined fluid temperature pattern. Thus, as described above, the controller 152 controls the heating unit 142 to continue heat the water 124 or other fluid according to the first heating profile.

As described above, the first heating profile may be, for example, a heating profile designed to heat a chilled foodstuff (e.g. a bottle of milk that has been taken from a refrigerator). The first heating profile may comprise a first target temperature for the fluid 124 and a first heating duration for which the fluid 124 is to be heated by the heating unit 142, such that in controlling the heating unit 142 in accordance with the first heating profile the controller 152 switches the heating unit 142 on for the first heating duration or until the fluid 124 has reached the first target temperature.

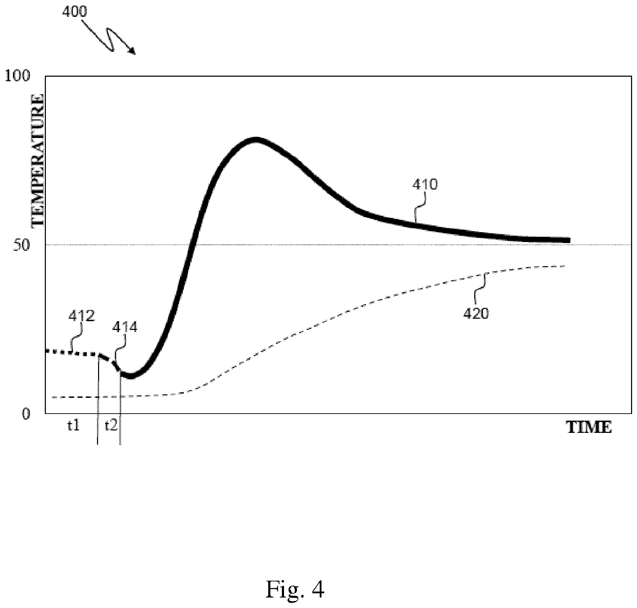

Figure 4 is a graph illustrating the operation of the heating device 100. The graph 400 of Figure 4 illustrates operation of the heating device according to steps 202, 204, 206, 230, 232, 234, 236 and 238 of the method 200 described above with reference to Figure 2.

The graph 400 of Figure 4 includes first and second curves 410 and 420. The first curve 410 shows the measured temperature of the water 124 (or other fluid) contained in the chamber 122 over a period of time. The second curve 420 shows the temperature of a foodstuff contained in the container 126 that is received in the chamber 122 over the same period of time.

As can be seen in Figure 4, in this example a first portion 412 of the first curve 410, which represents a measured temperature of the water 124 or other fluid over the first predetermined period of time t1, exhibits a first, decreasing, temperature trend. As can be seen in Figure 4, in this example the first temperature trend over the first predetermined period of time t1 does not follow the same pattern as the temperature trend of the first curve 310 of the graph 300 of Figure 3 for the corresponding first period of time t1, in that the rate of temperature decrease of the first portion 412 of the first curve 410 is lower than the rate of temperature decrease of the first portion 312 of the first curve 310 of the graph 300.

The controller 152 thus determines that the first temperature trend of the first portion 412 does not correspond to the first predefined fluid temperature pattern. Thus, as described above, the controller 152 controls the heating unit 142 to heat the water 124 or other fluid for the second predetermined period of time t2.

A second portion 414 of the first curve 410, which represents a measured temperature of the water 124 or other fluid over the second predetermined period of time t2 exhibits a second, decreasing, temperature trend. As can be seen in Figure 4, in this example the second temperature trend over the second predetermined period of time t2 follows the same pattern as the temperature trend of the first curve 310 of the graph 300 of Figure 3 for the corresponding second period of time t2.

The controller 152 thus determines that this second temperature trend corresponds to the second predefined fluid temperature pattern. Thus, as described above, the controller 152 controls the heating unit 142 to heat the water 124 or other fluid according to the first heating profile.

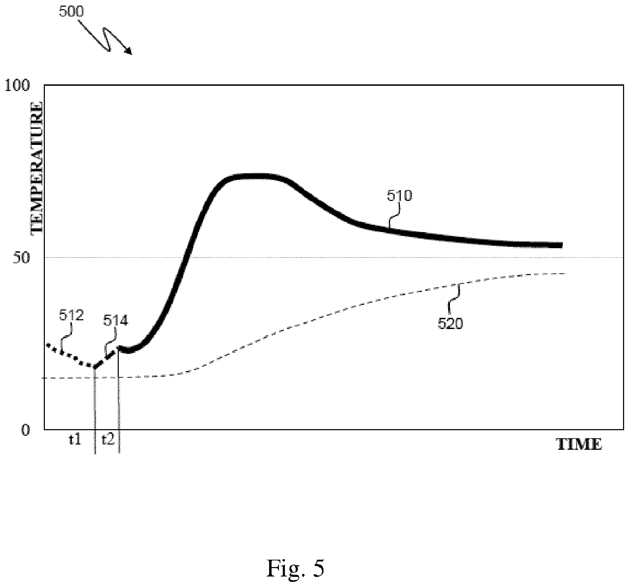

Figure 5 is a graph illustrating the operation of the heating device 100. The graph 500 of Figure 5 illustrates operation of the heating device according to steps 202, 204, 206, 210, 212, 214, 216 and 220 of the method 200 described above with reference to Figure 2.

The graph 500 of Figure 5 includes first and second curves 510 and 520. The first curve 510 shows the measured temperature of the water 124 (or other fluid) contained in the chamber 122 over a period of time. The second curve 520 shows the temperature of a foodstuff contained in the container 126 that is received in the chamber 122 over the same period of time.

As can be seen in Figure 5, in this example a first portion 512 of the first curve 510, which represents a measured temperature of the water 124 or other fluid over the first predetermined period of time t1, exhibits a first, decreasing, temperature trend. This first temperature trend follows a similar pattern to the temperature trend of the first curve 310 of the graph 300 of Figure 3 for the corresponding first period of time t1. The controller 152 thus determines that this first temperature trend corresponds to the first predefined fluid temperature pattern. Thus, as described above, the controller 152 determines a first heating profile and controls the heating unit 142 to heat the water 124 or other fluid according to the first heating profile. A second portion 514 of the first curve 510, which represents a measured temperature of the water 124 or other fluid over the second predetermined period of time t2, exhibits a second, increasing, temperature trend. The controller 152 determines that this second temperature trend does not correspond to the second predefined fluid temperature pattern. Thus, as described above, the controller 152 determines a second heating profile and controls the heating unit 142 to heat the water 124 or other fluid according to the second heating profile.

As described above, the second heating profile may be, for example, a heating profile designed to heat a foodstuff (e.g. a bottle of milk) that is initially at room temperature. The second heating profile may comprise a second target temperature for the fluid 124 and a second heating duration for which the fluid 124 is to be heated by the heating unit 142, such that in controlling the heating unit 142 in accordance with the first heating profile the controller 152 switches the heating unit 142 on for the second heating duration or until the fluid 124 has reached the second target temperature. The second target temperature may be lower than the first target temperature of the first heating profile. Additionally or alternatively, the second heating time may be less than the first heating time of the first heating profile.

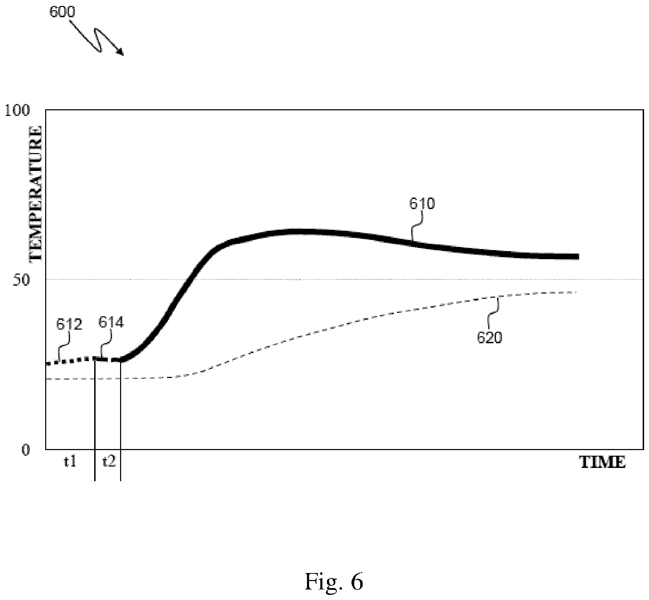

Figure 6 is a graph illustrating the operation of the heating device 100. The graph 600 of Figure 6 corresponds to operation of the heating device according to steps 202, 204, 206, 230, 232, 234, 236 and 240 of the method 200 described above with reference to Figure 2.

The graph 600 of Figure 6 includes first and second curves 610 and 620. The first curve 610 shows the measured temperature of the water 124 (or other fluid) contained in the chamber 122 over a period of time. The second curve 620 shows the temperature of a foodstuff contained in the container 126 that is received in the chamber 122 over the same period of time.

As can be seen in Figure 6, in this example a first portion 612 of the first curve 610, which represents a measured temperature of the water 124 or other fluid over the first predetermined period of time t1, exhibits a first, increasing, temperature trend. As will be appreciated (and as can be seen in Figure 6), in this example the increasing first temperature trend over the first predetermined period of time t1 does not follow the same pattern as the decreasing temperature trend of the first curve 310 of the graph 300 of Figure 3 for the corresponding first period of time t1.

The controller 152 thus determines that the first temperature trend of the first portion 612 does not correspond to the first predefined fluid temperature pattern. Thus, as described above, the controller 152 controls the heating unit 142 to heat the water 124 or other fluid for the second predetermined period of time t2.

A second portion 614 of the first curve 610, which represents a measured temperature of the water 124 or other fluid over the second predetermined period of time t2 exhibits a second, slightly decreasing, temperature trend. As can be seen in Figure 6, in this example the second temperature trend over the second predetermined period of time t2 does not follow the same pattern as the temperature trend of the first curve 310 of the graph 300 of Figure 3 for the corresponding second period of time t2.

The controller 152 thus determines that this second temperature trend does not correspond to the second predefined fluid temperature pattern. Thus, as described above, the controller 152 determines a third heating profile and controls the heating unit 142 to heat the water 124 or other fluid according to the third heating profile.

As described above the third heating profile may be, for example, a heating profile designed to heat a foodstuff (e.g. a bottle of milk) for which the initial temperature cannot be determined. The third heating profile may comprise a third target temperature for the fluid 124 and a third heating duration for which the fluid 124 is to be heated by the heating unit 142, such that in controlling the heating unit 142 in accordance with the third heating profile the controller 152 switches the heating unit 142 on for the third heating duration or until the fluid 124 has reached the third target temperature. The third target temperature may be lower than the second target temperature of the second heating profile. Additionally or alternatively, the third heating duration may be different from, e.g. shorter than, the second heating duration of the second heating profile.

As will be appreciated from the foregoing description, the heating device and method described herein provide an improved device and method for heating a foodstuff which address the limitations associated with existing devices and methods.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A heating device for heating a foodstuff in a container, the heating device comprising:
a chamber (122) configured to contain a fluid (124) and to receive the container (126);
a heating unit (142) for heating the fluid (124);
a temperature sensing unit (134); and
a controller (152) configured to control the heating unit,
wherein the temperature sensing unit is configured to sense a temperature of the fluid,
and wherein the controller is configured to:
monitor (204) the temperature of the fluid to determine a first measured temperature pattern for the fluid over a first predetermined period of time; **characterized in that**,
if the first measured temperature pattern corresponds to a first predetermined temperature pattern (210), determine a first heating profile and control the heating unit so as to heat the fluid (212) according to the first heating profile.

2. The heating device of claim 1, wherein the first predetermined temperature pattern is indicative of a decreasing temperature trend of the fluid.

3. The heating device of claim 1 or claim 2, wherein the controller is further configured to:
monitor (214) the temperature of the fluid over a second predetermined period of time to determine a second measured temperature pattern for the fluid over the second predetermined period of time; and
if the second measured temperature pattern corresponds to a second predetermined temperature pattern, control the heating unit so as to continue to heat the fluid (218) according to the first heating profile.

4. The heating device of claim 1 or claim 2, wherein the controller is further configured to:
monitor (214) the temperature of the fluid over a second predetermined period of time to determine a second measured temperature pattern for the fluid over the second predetermined period of time; and
if the second measured temperature pattern does not correspond to a second predetermined temperature pattern, determine a second heating profile and control the heating unit so as to heat the fluid (220) according to the second heating profile.

5. The heating device of claim 1 or claim 2, wherein the controller is further configured to:
if the first measured temperature pattern does not correspond to the first predetermined temperature pattern (230):
control the heating unit to heat the fluid (232) for a second predetermined period of time;
monitor (234) the temperature of the fluid to determine a second measured temperature pattern for the fluid over the second predetermined period of time; and
if the second measured temperature pattern corresponds to a second predetermined temperature pattern, control the heating unit so as to heat the fluid (238) according to the first heating profile.

6. The heating device of claim 5, wherein the controller is further configured to:
if the second measured temperature pattern does not correspond to the second predetermined temperature pattern, determine a third heating profile and control the heating unit so as to heat (240) the fluid according to the third heating profile.

7. The heating device of any of the preceding claims, wherein the controller is configured to provide a signal following completing heating of the fluid according to the first, second or third heating profile.

8. A method for heating a foodstuff in a container (126) using a heating device (100), the method comprising:
measuring a temperature of fluid (124) in a chamber (122) of the heating device in which the container is received;
monitoring (204) the measured temperature of the fluid to determine a first measured temperature pattern for the fluid over a first predetermined period of time; and
if the first measured temperature pattern corresponds to a first predetermined temperature pattern (210), determining a first heating profile and controlling the heating unit so as to heat the fluid (212) according to the first heating profile.

9. The method of claim 8, wherein the first predetermined temperature pattern is indicative of a decreasing temperature trend of the fluid.

10. The method of claim 8 or claim 9, further comprising:
monitoring (214) the temperature of the fluid over a second predetermined time period to determine a second measured temperature pattern for the fluid over the second predetermined period of time; and
if the second measured temperature pattern corresponds to a second predetermined temperature pattern, controlling the heating unit so as to continue to heat the fluid (218) according to the first heating profile.

11. The method of claim 8 or claim 9, further comprising:
monitoring (214) the temperature of the fluid over a second predetermined time period to determine a second measured temperature pattern for the fluid over the second predetermined period of time; and
if the second measured temperature pattern does not correspond to a second predetermined temperature pattern, determining a second heating profile and controlling the heating unit so as to heat the fluid (220) according to the second heating profile.

12. The method of claim 8 or claim 9, further comprising:
if the first measured temperature pattern does not correspond to the first predetermined temperature pattern (230):
controlling the heating unit to heat the fluid (232) for a second predetermined period of time;
monitoring (234) the temperature of the fluid to determine a second measured temperature pattern for the fluid over the second predetermined period of time; and
if the second measured temperature pattern corresponds to a second predetermined temperature pattern, controlling the heating unit so as to heat the fluid (238) according to the first heating profile.

13. The method of claim 12, further comprising:
if the second measured temperature pattern does not correspond to the second predetermined temperature pattern, determining a third heating profile and controlling the heating unit so as to heat the fluid (240) according to the third heating profile.

14. The method of any one of claims 8 to 13, further comprising providing a signal following completing heating of the fluid according to the first, second or third heating profile.

15. A computer program product comprising a computer readable medium, the computer readable medium having a computer readable code embodied therein, the computer readable code being configured such that, on execution by a suitable computer or processor, the computer or processor is caused to operate a heating device of claim 1, such device is caused to execute the steps according to the method as claimed in any one of claims 8 to 14.

## Patentansprüche

1. Heizvorrichtung zum Erhitzen eines Lebensmittels in einem Behälter, wobei die Heizvorrichtung umfasst:
eine Kammer (122), die so konfiguriert ist, dass sie ein Fluid (124) enthält und den Behälter (126) aufnimmt;
eine Heizeinheit (142) zum Erhitzen des Fluids (124);
eine Temperaturerfassungseinheit (134); und
eine Steuerung (152), die konfiguriert ist, um die Heizeinheit zu steuern,
wobei die Temperaturerfassungseinheit dazu konfiguriert ist, eine Temperatur des Fluids zu erfassen,
und wobei die Steuerung konfiguriert ist zum:
Überwachen (204) der Temperatur des Fluids, um ein erstes gemessenes Temperaturmuster für das Fluid über einen ersten vorbestimmten Zeitraum zu bestimmen; **dadurch gekennzeichnet, dass**
wenn das erste gemessene Temperaturmuster einem ersten vorbestimmten Temperaturmuster (210) entspricht, Bestimmen eines ersten Heizprofils und Steuern der Heizeinheit, um das Fluid (212) gemäß dem ersten Heizprofil zu erwärmen.

2. Heizvorrichtung nach Anspruch 1, wobei das erste vorbestimmte Temperaturmuster einen abnehmenden Temperaturtrend des Fluids anzeigt.

3. Heizvorrichtung nach Anspruch 1 oder Anspruch 2, wobei die Steuerung ferner konfiguriert ist zum:
Überwachen (214) der Temperatur des Fluids über einen zweiten vorbestimmten Zeitraum, um ein zweites gemessenes Temperaturmuster für das Fluid über den zweiten vorbestimmten Zeitraum zu bestimmen; und
wenn das zweite gemessene Temperaturmuster einem zweiten vorbestimmten Temperaturmuster entspricht, Steuern der Heizeinheit, um das Fluid (218) gemäß dem ersten Heizprofil weiter zu erwärmen.

4. Heizvorrichtung nach Anspruch 1 oder Anspruch 2, wobei die Steuerung ferner konfiguriert ist zum:
Überwachen (214) der Temperatur des Fluids über einen zweiten vorbestimmten Zeitraum, um ein zweites gemessenes Temperaturmuster für das Fluid über den zweiten vorbestimmten Zeitraum zu bestimmen; und
wenn das zweite gemessene Temperaturmuster nicht einem zweiten vorbestimmten Temperaturmuster entspricht, Bestimmen eines zweiten Heizprofils und Steuern der Heizeinheit, um das Fluid (220) gemäß dem zweiten Heizprofil zu erwärmen.

5. Heizvorrichtung nach Anspruch 1 oder Anspruch 2, wobei die Steuerung ferner konfiguriert ist zum:
wenn das erste gemessene Temperaturmuster nicht dem ersten vorbestimmten Temperaturmuster (230) entspricht:
Steuern der Heizeinheit, um das Fluid (232) für eine zweite vorbestimmte Zeitdauer zu erwärmen;
Überwachen (234) der Temperatur des Fluids, um ein zweites gemessenes Temperaturmuster für das Fluid über die zweite vorbestimmte Zeitdauer zu bestimmen; und
wenn das zweite gemessene Temperaturmuster einem zweiten vorbestimmten Temperaturmuster entspricht, Steuern der Heizeinheit, um das Fluid (238) gemäß dem ersten Heizprofil zu erwärmen.

6. Heizvorrichtung nach Anspruch 5, wobei die Steuerung ferner konfiguriert ist zum:
wenn das zweite gemessene Temperaturmuster nicht dem zweiten vorbestimmten Temperaturmuster entspricht, Bestimmen eines dritten Heizprofils und Steuern der Heizeinheit, um das Fluid gemäß dem dritten Heizprofil zu erwärmen (240).

7. Heizvorrichtung nach einem der vorangehenden Ansprüche, wobei die Steuerung konfiguriert ist, um ein Signal nach Abschluss der Erwärmung des Fluids gemäß dem ersten, zweiten oder dritten Erwärmungsprofil bereitzustellen.

8. Verfahren zum Erhitzen eines Lebensmittels in einem Behälter (126) unter Verwendung einer Heizvorrichtung (100), wobei das Verfahren umfasst:
Messen einer Temperatur eines Fluids (124) in einer Kammer (122) der Heizvorrichtung, in der der Behälter aufgenommen ist;
Überwachen (204) der gemessenen Temperatur des Fluids, um ein erstes gemessenes Temperaturmuster für das Fluid über einen ersten vorbestimmten Zeitraum zu bestimmen; und
wenn das erste gemessene Temperaturmuster einem ersten vorbestimmten Temperaturmuster (210) entspricht, Bestimmen eines ersten Heizprofils und Steuern der Heizeinheit, um das Fluid (212) gemäß dem ersten Heizprofil zu erwärmen.

9. Verfahren nach Anspruch 8, wobei das erste vorbestimmte Temperaturmuster einen abnehmenden Temperaturtrend des Fluids anzeigt.

10. Verfahren nach Anspruch 8 oder Anspruch 9, ferner umfassend:
Überwachen (214) der Temperatur des Fluids über einen zweiten vorbestimmten Zeitraum, um ein zweites gemessenes Temperaturmuster für das Fluid über den zweiten vorbestimmten Zeitraum zu bestimmen; und
wenn das zweite gemessene Temperaturmuster einem zweiten vorbestimmten Temperaturmuster entspricht, Steuern der Heizeinheit, um das Fluid (218) gemäß dem ersten Heizprofil weiter zu erwärmen.

11. Verfahren nach Anspruch 8 oder Anspruch 9, ferner umfassend:
Überwachen (214) der Temperatur des Fluids über einen zweiten vorbestimmten Zeitraum, um ein zweites gemessenes Temperaturmuster für das Fluid über den zweiten vorbestimmten Zeitraum zu bestimmen; und
wenn das zweite gemessene Temperaturmuster nicht dem zweiten vorbestimmten Temperaturmuster entspricht, Bestimmen eines zweiten Heizprofils und Steuern der Heizeinheit, um das Fluid (220) gemäß dem zweiten Heizprofil zu erwärmen.

12. Verfahren nach Anspruch 8 oder Anspruch 9, ferner umfassend:
wenn das erste gemessene Temperaturmuster nicht dem ersten vorbestimmten Temperaturmuster (230) entspricht:
Steuern der Heizeinheit, um das Fluid (232) für eine zweite vorbestimmte Zeitdauer zu erwärmen;
Überwachen (234) der Temperatur des Fluids, um ein zweites gemessenes Temperaturmuster für das Fluid über die zweite vorbestimmte Zeitdauer zu bestimmen; und
wenn das zweite gemessene Temperaturmuster einem zweiten vorbestimmten Temperaturmuster entspricht, Steuern der Heizeinheit, um das Fluid (238) gemäß dem ersten Heizprofil zu erwärmen.

13. Verfahren nach Anspruch 12, ferner umfassend:
wenn das zweite gemessene Temperaturmuster nicht dem zweiten vorbestimmten Temperaturmuster entspricht, Bestimmen eines dritten Heizprofils und Steuern der Heizeinheit, um das Fluid (240) gemäß dem dritten Heizprofil zu erwärmen.

14. Verfahren nach einem der Ansprüche 8 bis 13, ferner umfassend das Bereitstellen eines Signals nach Abschluss der Erwärmung des Fluids gemäß dem ersten, zweiten oder dritten Erwärmungsprofil.

15. Computerprogrammprodukt, das ein computerlesbares Medium umfasst, wobei das computerlesbare Medium einen darin verkörperten computerlesbaren Code aufweist, wobei der computerlesbare Code so konfiguriert ist, dass bei Ausführung durch einen geeigneten Computer oder Prozessor der Computer oder Prozessor veranlasst wird, eine Heizvorrichtung nach Anspruch 1 zu betreiben, wobei eine solche Vorrichtung veranlasst wird, die Schritte gemäß dem Verfahren nach einem der Ansprüche 8 bis 14 auszuführen.

## Revendications

1. Dispositif de chauffage pour réchauffer un aliment dans un récipient, le dispositif de chauffage comprenant:
une chambre (122) configurée pour contenir un fluide (124) et pour recevoir le récipient (126);
une unité de chauffage (142) pour chauffer le fluide (124);
une unité de détection de température (134); et
un dispositif de commande (152) configuré pour commander l'unité de chauffage,
où l'unité de détection de la température est configurée pour détecter une température du fluide,
et où le dispositif de commande est configuré pour:
surveiller (204) la température du fluide pour déterminer un premier modèle de température mesuré pour le fluide au cours d'une première période de temps prédéterminée; **caractérisé en ce que**,
si le premier modèle de température mesuré correspond à un premier modèle de température prédéterminé (210), déterminer un premier profil de chauffage et commander l'unité de chauffage de manière à chauffer le fluide (212) selon le premier profil de chauffage.

2. Dispositif de chauffage selon la revendication 1, dans lequel le premier modèle de température prédéterminé est indicatif d'une tendance à la baisse de la température du fluide.

3. Dispositif de chauffage selon la revendication 1 ou la revendication 2, dans lequel le dispositif de commande est en outre configuré pour:
surveiller (214) la température du fluide au cours d'une deuxième période de temps prédéterminée pour déterminer un deuxième modèle de température mesuré pour le fluide au cours de la deuxième période de temps prédéterminée; et
si le deuxième modèle de température mesuré correspond à un deuxième modèle de température prédéterminé, commander l'unité de chauffage de manière à continuer à chauffer le fluide (218) selon le premier profil de chauffage.

4. Dispositif de chauffage selon la revendication 1 ou la revendication 2, dans lequel le dispositif de commande est en outre configuré pour:
surveiller (214) la température du fluide au cours d'une deuxième période de temps prédéterminée pour déterminer un deuxième modèle de température mesuré pour le fluide au cours de la deuxième période de temps prédéterminée; et
si le deuxième modèle de température mesuré ne correspond pas à un deuxième modèle de température prédéterminé, déterminer un deuxième profil de chauffage et commander l'unité de chauffage de manière à chauffer le fluide (220) selon le deuxième profil de chauffage.

5. Dispositif de chauffage selon la revendication 1 ou la revendication 2, dans lequel le dispositif de commande est en outre configuré pour:
si le premier modèle de température mesuré ne correspond pas au premier modèle de température prédéterminé (230):
commander à l'unité de chauffage de chauffer le fluide (232) pour une deuxième période de temps prédéterminée;
surveiller (234) la température du fluide pour déterminer un deuxième modèle de température mesuré pour le fluide au cours de la deuxième période de temps prédéterminée; et
si le deuxième modèle de température mesuré correspond à un deuxième modèle de température prédéterminé, commander l'unité de chauffage de manière à chauffer le fluide (238) selon le premier profil de chauffage.

6. Dispositif de chauffage selon la revendication 5, dans lequel le dispositif de commande est en outre configuré pour:
si le deuxième modèle de température mesuré ne correspond pas au deuxième modèle de température prédéterminé, déterminer un troisième profil de chauffage et commander l'unité de chauffage de manière à chauffer (240) le fluide selon le troisième profil de chauffage.

7. Dispositif de chauffage selon l'une quelconque des revendications précédentes, dans lequel le dispositif de commande est configuré pour fournir un signal après l'achèvement du chauffage du fluide selon le premier, le deuxième ou le troisième profil de chauffage.

8. Procédé de chauffage d'un aliment dans un récipient (126) à l'aide d'un dispositif de chauffage (100), le procédé consistant à:
mesurer une température de fluide (124) dans une chambre (122) du dispositif de chauffage dans laquelle le récipient est reçu;
surveiller (204) la température mesurée du fluide pour déterminer un premier modèle de température mesuré pour le fluide au cours d'une première période de temps prédéterminée; et
si le premier modèle de température mesuré correspond à un premier modèle de température prédéterminé (210), déterminer un premier profil de chauffage et commander l'unité de chauffage de manière à chauffer le fluide (212) selon le premier profil de chauffage.

9. Procédé selon la revendication 8, dans lequel le premier modèle de température prédéterminé est indicatif d'une tendance à la baisse de la température du fluide.

10. Procédé selon la revendication 8 ou la revendication 9, consistant en outre à:
surveiller (214) la température du fluide au cours d'une deuxième période de temps prédéterminée pour déterminer un deuxième modèle de température mesuré pour le fluide au cours de la deuxième période de temps prédéterminée; et
si le deuxième modèle de température mesuré correspond à un deuxième modèle de température prédéterminé, commander l'unité de chauffage de manière à continuer à chauffer le fluide (218) selon le premier profil de chauffage.

11. Procédé selon la revendication 8 ou la revendication 9, consistant en outre à:
surveiller (214) la température du fluide au cours d'une deuxième période de temps prédéterminée pour déterminer un deuxième modèle de température mesuré pour le fluide au cours de la deuxième période de temps prédéterminée; et
si le deuxième modèle de température mesuré ne correspond pas à un deuxième modèle de température prédéterminé, déterminer un deuxième profil de chauffage et commander l'unité de chauffage de manière à chauffer le fluide (220) selon le deuxième profil de chauffage.

12. Procédé selon la revendication 8 ou la revendication 9, consistant en outre à:
si le premier modèle de température mesuré ne correspond pas au premier modèle de température prédéterminé (230):
commander à l'unité de chauffage de chauffer le fluide (232) pour une deuxième période de temps prédéterminée;
surveiller (234) la température du fluide pour déterminer un deuxième modèle de température mesuré pour le fluide au cours de la deuxième période de temps prédéterminée; et
si le deuxième modèle de température mesuré correspond à un deuxième modèle de température prédéterminé, commander l'unité de chauffage de manière à chauffer le fluide (238) selon le premier profil de chauffage.

13. Procédé selon la revendication 12, consistant en outre à:
si le deuxième modèle de température mesuré ne correspond pas au deuxième modèle de température prédéterminé, déterminer un troisième profil de chauffage et commander l'unité de chauffage de manière à chauffer le fluide (240) selon le troisième profil de chauffage.

14. Procédé selon l'une quelconque des revendications 8 à 13, comprenant en outre la fourniture d'un signal à la suite de l'achèvement du chauffage du fluide selon le premier, le deuxième ou le troisième profil de chauffage.

15. Produit de programme informatique comprenant un support lisible par ordinateur, le support lisible par ordinateur ayant un code lisible par ordinateur intégré, le code lisible par ordinateur étant configuré de telle sorte que, lors de l'exécution par un ordinateur ou un processeur approprié, l'ordinateur ou le processeur est amené à faire fonctionner un dispositif de chauffage selon la revendication 1, ledit dispositif étant amené à exécuter les étapes selon le procédé tel que revendiqué dans l'une quelconque des revendications 8 à 14.
